Europäisches Patentamt

European Patent Office

Office européen des brevets

(11) Numéro de publication: **0 539 436 B1**

# (12) FASCICULE DE BREVET EUROPEEN

(45) Date de publication du fascicule du brevet: **04.10.95**
(51) Int. Cl.⁶: **B60C 15/024**, B60C 15/05

(21) Numéro de dépôt: **91913036.9**

(22) Date de dépôt: **12.07.91**

(86) Numéro de dépôt internationale :
**PCT/FR91/00569**

(87) Numéro de publication internationale :
**WO 92/01578 (06.02.92 92/04)**

(54) **PNEUMATIOUE DONT LES BOURRELETS A SIEGES TRONCONIOUES SONT MUNIS D'AU MOINS UNE TRINGLE PRINCIPALE ET D'UNE TRINGLE AUXILIAIRE.**

(30) Priorité: **17.07.90 FR 9009211**

(43) Date de publication de la demande:
**05.05.93 Bulletin 93/18**

(45) Mention de la délivrance du brevet:
**04.10.95 Bulletin 95/40**

(84) Etats contractants désignés:
**AT DE ES FR GB IT LU NL SE**

(56) Documents cités:
**EP-A- 0 168 754**
**DE-A- 2 901 719**
**FR-A- 2 346 171**
**FR-A- 2 432 946**
**FR-A- 2 548 970**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **DIERNAZ, Christian**
**21, route de Marsat**
**F-63200 Riom (FR)**

(74) Mandataire: **Devaux, Edmond-Yves**
**Michelin & Cie**
**Service SRK. Brevets**
**23, Place des Carmes**
**F-63040 Clermont-Ferrand Cédex (FR)**

EP 0 539 436 B1

## Description

L'invention concerne un pneumatique à armature de carcasse radiale ancrée dans chaque bourrelet à au moins une tringle, chaque bourrelet ayant un siège incliné par rapport à l'axe de rotation du pneumatique d'un angle supérieur à 5°, généralement au moins égal à 15° ± 1°. L'armature de carcasse radiale est surmontée radialement d'une armature de sommet d'une ou plusieurs nappes de fils ou câbles.

Dans chaque bourrelet, axialement à l'extérieur du retournement de la nappe de carcasse sont, de manière connue, disposées une ou plusieurs nappes de fils ou câbles textiles ou métalliques orientés d'un angle faible par rapport à la direction circonférentielle du pneumatique, l'extrémité radialement extérieure de cette (ces) nappe(s) étant localisée(s) soit au dessus soit au dessous de l'extrémité du retournement de l'armature de carcasse, l'extrémité radialement intérieure pouvant se localiser dans la pointe du bourrelet.

Cette armature de renforcement dans chaque bourrelet a pour fonction de rigidifier le mélange de caoutchouc se trouvant axialement à l'extérieur du retournement de l'armature de carcasse. Elle donne lieu à des décollages avec ruptures de caoutchouc à son extrémité radialement extérieure. En outre, étant donné le profil de la base du bourrelet, étudié en fonction du profil de la jante de service sur laquelle est monté le pneumatique, la pression de contact entre le bourrelet et la jante est très élevée entre la partie inclinée de la base du bourrelet et le siège incliné de la jante. Il en est de même entre le rebord de jante et la partie correspondante du pneumatique, le pneumatique étant gonflé à sa pression de service mais non chargé. Par contre, la partie du bourrelet localisée immédiatement au dessus du rebord de jante, et non en contact avec ce rebord lorsque le pneumatique est gonflé, prend contact avec le rebord de jante, sous l'effet de la charge appliquée au pneumatique, lors du passage dans l'ellipse de contact entre ledit pneumatique et le sol. Les glissements entre caoutchouc du pneumatique et métal de la jante de service sont importants, d'où une dégradation par usure rapide et conséquente de la partie du bourrelet considérée ci-dessus et d'autant plus importante que des corps étrangers tels que grains de sable, poussière, peuvent venir s'insérer entre le caoutchouc et le métal.

Il est connu par la demande EP 0 168 754 des pneumatiques dont les bourrelets sont munis de deux tringles, une tringle principale autour de laquelle peut s'ancrer une armature de carcasse radiale et une tringle auxiliaire autour de laquelle peut s'enrouler une nappe de renforcement. Il s'agit manifestement d'un pneumatique pour voiture de tourisme, destiné à être monté sur une jante munie d'une saillie circonférentielle sur le siège de jante, afin de lutter contre le décoincement du bourrelet. Ce type de pneumatique ne présente généralement pas d'avaries au niveau du retournement de l'armature de carcasse ou au niveau des extrémités de la nappe de renforcement.

Afin de remédier aux inconvénients énumérés ci-dessus, c'est-à-dire afin d'améliorer la tenue de la zone basse du pneumatique à la dégradation du caoutchouc la composant, ainsi que la résistance de l'armature de renforcement au décollage, la combinaison, conforme à l'invention, d'un pneumatique doté d'une armature de carcasse radiale, d'une armature de sommet et de deux bourrelets, renforcés respectivement par au moins une tringle autour de laquelle vient s'enrouler l'armature de carcasse et une tringle auxiliaire autour de laquelle s'enroule une nappe de fils ou câbles, et d'une jante à sièges inclinés d'un angle à 15° ± 1° par rapport à l'axe de rotation, ayant un rayon nominal $R_N$ et des rebords de jante circulaires de rayon $\rho_2$ et de rayon $R_J$ par rapport à l'axe de rotation, ces rebords étant reliés aux sièges par des portions circulaires de rayon $\rho_1$, est caractérisée en ce que

- d'une part, la base de chaque bourrelet présente, vue en section méridienne, un profil comprenant une génératrice à inclinaison variable par rapport à l'axe de rotation, la partie axialement intérieure faisant un angle compris entre 25° et 30° par rapport audit axe et la partie axialement extérieure faisant un angle compris entre 15° et 20° cette génératrice étant prolongée axialement à l'extérieur par des portions en arc de cercle respectivement de rayons sensiblement égaux aux rayons $\rho_1$ et $\rho_2$ du profil de jante, le point de la base du bourrelet le plus éloigné de l'axe de rotation étant distant dudit axe de $R_B$ inférieur au rayon $R_J$ du rebord de jante et

- d'autre part, la tringle auxiliaire est située dans la partie du bourrelet destinée à recouvrir le rebord de jante, tel que le rapport

$$S = \frac{R_J - R_B}{R_I - R_B}$$

soit au moins égal à 0,1,

$R_I$ étant le rayon intérieur de la tringle, une nappe de renforcement de fils ou câbles étant enroulée autour de la tringle auxiliaire et formant deux couches dont l'une au moins s'étend jusqu'à la pointe du bourrelet, les fils ou câbles formant avec la direction circonférentielle du pneumatique, un angle compris entre 90° et 45°.

Il faut entendre par tringle auxiliaire tout anneau circulaire, ayant une section transversale de forme quelconque, et une composition quelconque dans la mesure où cet anneau présente un module d'extension au moins égal à 4000 MPa.

Cet anneau pourra être par exemple réalisé en matière plastique (polyamide, polyester) simple mais pourra être aussi, comme les tringles habituelles, composé de plusieurs fils ou câbles assemblés entre eux, ou alors enrobés dans une matière plastique qui forme l'assemblage.

De manière avantageuse, la tringle auxiliaire est une tringle de type tressée de section circulaire, dont le rayon de section est compris entre 5 et 10 mm . Ce genre de tringle présente une certaine extension sous effort, ce qui facilite le montage du pneumatique et en particulier le montage de la partie axialement extérieure de chaque bourrelet.

Afin de permettre un meilleur contact entre la zone tronconique du bourrelet et le siège tronconique de la jante, les deux couches de fils ou câbles, résultantes de l'enroulement de la nappe de renforcement autour de la tringle auxiliaire, sont sous la tringle principale superposées l'une sur l'autre et s'étendent axialement à l'intérieur jusqu'à la pointe du bourrelet. L'une de ces couches, et préférentiellement la couche radialement intérieure, est prolongée dans la pointe du bourrelet en remontant dans celle-ci afin de la renforcer. Ces solutions préférentielles permettent, d'une part d'éviter le déroulement de l'armature de carcasse autour des tringles et d'autre part le renforcement de la base des bourrelets contre les blessures de montage.

Ce renforcement est plus efficace si les angles que font les fils ou câbles, textiles ou métalliques des couches sont égaux à 90° par rapport à la direction circonférentielle.

Afin de ne pas pénaliser l'endurance de l'extrémité du retournement de l'armature de carcasse, il est avantageux que cette extrémité soit située sur un rayon inférieur au rayon extérieur de la tringle auxiliaire. De même, une dépression ou cavité pourra être formée dans la partie du flanc située immédiatement radialement au-dessus de la tringle auxiliaire, ce qui permet une moindre génération de calories, une dissipation de ces calories plus rapide au niveau de l'extrémité du retournement de l'armature de carcasse, tout en compensant dans le mesure du possible l'augmentation de poids du pneumatique due à l'emploi d'une tringle auxiliaire. En outre, cette dépression permet de conserver une épaisseur de flanc constante sur une plus grande hauteur, et en conséquence de rendre ce flanc plus efficace.

La description qui suit en regard du dessin annexé, donné à titre d'exemple, fera mieux comprendre la mise en oeuvre de l'invention.

Sur ce dessin,

- la figure 1 est une vue méridienne du bourrelet du pneumatique conforme à l'invention ;
- la figure 2 est une vue méridienne de la base du bourrelet du pneumatique comparativement au profil de la jante normalisée sur laquelle est monté le pneumatique.

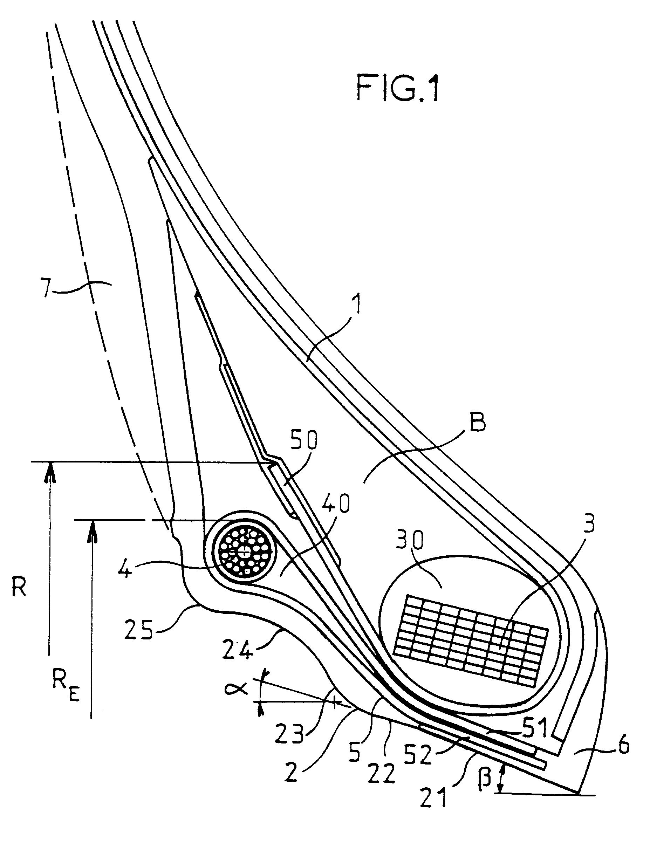

Le pneumatique 315/80 R 22.5 de la figure 1 possède un bourrelet (B), pourvu d'une tringle principale (3) à fils rectangulaires, enrobée dans un mélange de caoutchouc (30) autour duquel vient s'enrouler une armature de carcasse (1), créant ainsi un retournement (50) dont l'extrémité est située à une distance (R) égale à 318 mm de l'axe de rotation du pneumatique.

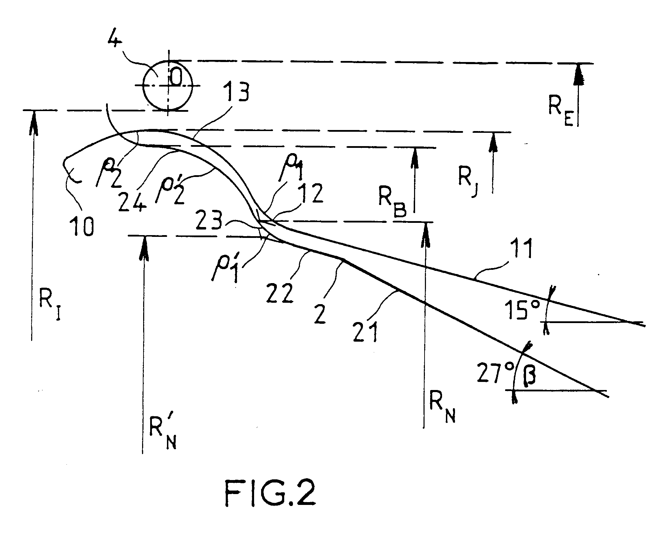

Le contour de la partie de la jante (10) 22.5 x 9.00 sur laquelle reposera le bourrelet (B) du pneumatique (Fig. 2) est composée essentiellement d'un siège tronconique (11), dont la génératrice (11) fait avec l'axe de rotation un angle de 15° ± 1°, cette génératrice (11) est reliée à un arc de cercle (13) de rayon ($\rho_2$) égal à 12,7 mm, par l'intermédiaire d'un deuxième arc de cercle (12) de rayon ($\rho_1$) égal à 8 mm. Le rayon nominal ($R_N$) de la jante est la distance séparant le point d'intersection des prolongements de la génératrice (11) et de l'arc de cercle (13) de l'axe de rotation du pneumatique, tandis que le rayon ($R_J$) du rebord de jante est la distance séparant les points les plus éloignés de l'axe de rotation dudit rebord.

Le contour ou profil, vu en section méridienne, de la base du bourrelet (B) du pneumatique, se déduit pratiquement du profil de la jante (10). Le profil de la base du bourrelet se compose essentiellement d'une zone tronconique (21, 22) à deux inclinaisons se raccordant à un arc de cercle (24) par l'intermédiaire d'un deuxième arc de cercle 23).

La génératrice de la zone bitronconique (21, 22) fait, pour la partie (21) avec l'axe de rotation du pneumatique un angle ($\beta$) égal à 27°, et pour la partie (22) un angle ($\alpha$) égal à 15°. Les rayons ($\rho'_1$) et ($\rho'_2$) des deuxième et premier arcs de cercles de la base du bourrelet sont respectivement égaux aux rayons ($\rho_1$) et ($\rho_2$) du profil de la jante (10). De la même manière que pour la jante (10), on définit le rayon nominal ($R'_N$) de la base (21, 22, 23, 24) du bourrelet (B) : distance à l'axe de rotation du pneumatique de l'intersection des prolongements de la génératrice (21) et de l'arc de cercle (24). Le rayon ($R'_N$) est alors inférieur au rayon ($R_N$) de la jante (10) d'une quantité égale à ΔR, ce qui a pour conséquence, si on appelle ($R_B$) le rayon de l'extrémité axialement extérieure de la base du bourrelet (B), que ce rayon ($R_B$) est inférieur au rayon ($R_J$) de la même quantité ΔR égale dans cas étudié à 0,5 mm.

La tringle auxiliaire (4) (Fig. 1) est une tringle du type "tressé", de section circulaire de rayon égal à 5 mm. Son centre (O) est dans le même plan perpendiculaire à l'axe de rotation que l'extrémité de l'arc de cercle (24) et le rayon intérieur ($R_I$) de cette tringle (4) est tel que le rapport

$$\frac{R_J - R_B}{R_I - R_B}$$

est égal à 0,1

Autour de la tringle (4) est enroulée une nappe (5) de câbles métalliques composés de (3 + 9) fils de 15/100, donnant naissance à deux couches (51) (52) superposées l'une sur l'autre sous la tringle principale (3) et s'étendant jusqu'à la pointe (6) du bourrelet (B), les câbles métalliques font avec la direction circonférentielle un angle de 90°.

Axialement à l'extérieur de la tringle (4), le profil du flanc du pneumatique se raccorde à l'extrémité de l'arc (24) par un arc de cercle (25) mais tout autre profil peut être utilisé dans la mesure où la nappe (5) de câbles est suffisamment recouverte de mélange de caoutchouc pour résister aux agressions extérieures.

Un essai d'endurance normal, c'est-à-dire un roulage prolongé sous des conditions normales de pression mais avec surcharge permet de constater l'amélioration d'une part de la résistance au décollage de l'armature de renforcement auxiliaire dans le bourrelet, disposée axialement à l'extérieur du retournement de l'armature de carcasse, d'autre part de l'usure de la partie du bourrelet localisée immédiatement au-dessus du rebord de jante. En outre, un roulage à faible vitesse, le pneumatique étant monté sur une jante chauffée et chauffante, permet d'évaluer l'amélioration obtenue de la tenue au déroulement de l'armature de carcasse ; ainsi un pneumatique de la dimension citée ci-dessus et d'architecture connue réalise environ 5 000 km pour que l'armature de carcasse se déroule, alors qu'un pneumatique conforme à l'invention atteint une distance de 20 000 km sans qu'il y ait déroulement ou autre avarie dans le bourrelet.

**Revendications**

1. Combinaison d'une jante (10) à sièges inclinés (11) d'un angle de 15 ± 1° par rapport à l'axe de rotation du pneumatique, ayant un rayon nominal $R_N$ et des rebords de jantes (13) circulaires de rayon $\rho_2$ égal à 12,7 mm et de rayon $R_J$ par rapport à l'axe de rotation, ces rebords étant reliés aux sièges tronconiques (11) par des arcs de cercle (12) de rayon $\rho_1$ égal à 8 mm, et d'un pneumatique destiné à être monté sur cette jante et doté d'une armature de carcasse radiale (1) d'une armature de sommet composée d'au moins deux nappes croisées, et deux bourrelets B renforcés respectivement par au moins une tringle (3) autour de laquelle vient s'ancrer l'armature de carcasse (1), et une tringle auxiliaire (4) autour de laquelle s'enroule une nappe (5) de fils ou câbles, caractérisé en ce que,

- d'une part, la base (2) du bourrelet B présente, vue en section méridienne, un profil comprenant une génératrice (21, 22) à double inclinaison par rapport à l'axe de rotation du pneumatique, la partie axialement intérieure faisant un angle compris entre 25° et 30° et la partie axialement extérieure faisant un angle compris entre 15° et 20°, cette génératrice (21, 22) étant prolongée axialement à l'extérieur par des portions (23, 24) en arc de cercle de rayons sensiblement égaux aux rayons $\rho_1$, $\rho_2$, du profil de jante, le point de la base (2) du bourrelet la plus éloignée de l'axe de rotation étant distant dudit axe d'un rayon $R_B$ inférieur au rayon $R_J$ du rebord de jante (13) et,

- d'autre part la tringle auxiliaire (4) de module d'extension au moins égal à 4000 MPa, est située dans la partie du bourrelet B destinée à recouvrir le rebord de jante (13), tel que le rapport

$$s = \frac{R_J - R_B}{R_I - R_B}$$

soit au moins égal à 0,1, $R_I$ étant le rayon intérieur de la tringle, et la nappe de renforcement (5) de fils ou câbles, enroulée autour de la tringle auxiliaire (4) étant formée de deux couches (51, 52), dont l'une au moins s'étend jusqu'à la pointe (6) du bourrelet B, les fils ou câbles formant avec la direction circonférentielle un angle compris entre 90° et 45°.

2. Pneumatique selon la revendication 1, caractérisé en ce que la tringle auxiliaire (4) est une tringle de type tressé de section circulaire, dont le rayon de section est entre 5 et 10 mm.

3. Pneumatique selon l'une des revendications 1 à 2, caractérisé en ce que les deux couches (51, 52) de la nappe (5) sont au moins sous la tringle principale (3), superposées l'une sur l'autre jusqu'à la pointe (6) du bourrelet B.

**4.** Pneumatique selon la revendication 3, caractérisé en ce que les extrémités des couches (51, 52) sont décalées l'une par rapport à l'autre, la couche (52) radialement intérieure remontant dans la pointe (6) du bourrelet.

**5.** Pneumatique selon l'une des revendications 1 à 4, caractérisé en ce que les fils ou câbles de la nappe de renforcement (5) sont métalliques, de préférence en acier et font avec la direction circonférentielle un angle de 90°.

**6.** Pneumatique selon l'une des revendications 1 à 5, caractérisée en ce que l'extrémité du retournement (50) de l'armature de carcasse (1) est située radialement à un rayon R inférieur au rayon $R_E$ extérieur de la tringle auxiliaire (4).

**7.** Pneumatique selon l'une des revendication 1 à 6, caractérisé en ce que radialement au-dessus de la tringle auxiliaire (4) est créée dans le flanc du pneumatique une dépression (7).

## Claims

**1.** The combination of a rim (10) having seats (11) inclined by an angle of 15° ± 1° with respect to the axis of rotation of the tyre, having a nominal radius $R_N$ and circular rim flanges (13) of radius $\rho_2$ equal to 12.7 mm and of radius $R_J$ with respect to the axis of rotation, these flanges being connected to the frustoconical seats (11) by circular arcs (12) of radius $\rho_1$, equal to 8 mm, and of a tyre intended to be mounted on this rim and provided with a radial carcass reinforcement (1), a crown reinforcement formed of at least two crossed plies, and two beads B, reinforced respectively by at least one bead ring (3) around which the carcass reinforcement (1) is anchored, and an auxiliary bead ring (4) around which a ply (5) of cords or cables is wound, characterised in that:

- on the one hand, the base (2) of the bead B has, seen in meridian section, a profile comprising a generatrix (21, 22) with double inclination with respect to the axis of rotation of the tyre, the axially inner portion forming an angle of between 25° and 30° and the axially outer portion forming an angle of between 15° and 20°, this generatrix (21, 22) being extended axially to the outside by portions (23, 24) in the shape of circular arcs of radii substantially equal to the radii $\rho_1$, $\rho_2$, of the rim profile, the tip of the base (2) of the bead furthest from the axis of rotation being at a distance from said axis of a radius $R_B$ less than the radius $R_J$ of the rim flange (13), and

- on the other hand, the auxiliary bead ring (4) of a modulus of extension of at least 4,000 MPa is located in the portion of the bead B intended to cover the rim flange (13), such that the ratio

$$S = \frac{R_J - R_B}{R_I - R_B}$$

is at least equal to 0.1, $R_I$ being the inner radius of the bead ring, and the reinforcement ply (5) of cords or cables which is wound around the auxiliary bead ring (4) being formed of two layers (51, 52), one of which at least extends to the toe (6) of the bead B, the cords or cables forming an angle of between 90° and 45° with the circumferential direction.

**2.** A tyre according to Claim 1, characterised in that the auxiliary bead ring (4) is a bead ring of braided type of circular cross-section, the cross-sectional radius of which is between 5 and 10 mm.

**3.** A tyre according to one of Claims 1 to 2, characterised in that the two layers (51, 52) of the ply (5) are at least under the main bead ring (3), superimposed on each other up to the toe (6) of the bead B.

**4.** A tyre according to Claim 3, characterised in that the ends of the layers (51, 52) are offset from each other, the layer (52) which is radially on the inside rising into the toe (6) of the bead.

**5.** A tyre according to one of Claims 1 to 4, characterised in that the cords or cables of the reinforcement ply (5) are of metal, preferably of steel, and form an angle of 90° with the circumferential direction.

**6.** A tyre according to one of Claims 1 to 5, characterised in that the end of the upturn (50) of the carcass reinforcement (1) is located radially at a radius R less than the outer radius $R_E$ of the auxiliary bead ring (4).

**7.** A tyre according to one of Claims 1 to 6, characterised in that a depression (7) is created in the sidewall of the tyre radially above the auxiliary bead ring (4).

**Patentansprüche**

1. Kombination aus einer Felge (10) mit unter einem Winkel von 15 ± 1° gegen die Drehachse des Luftreifens geneigten Felgensitzen (11) mit einem Nennradius ($R_N$) und kreisförmigen Felgenkanten (13) mit einem Radius $\rho_2$ von 12,7 mm und einem Radius $R_J$ bezüglich der Drehachse, wobei die Kante mit den kegelförmigen Sitzen (11) über Kreisbögen (12) mit Radius $\rho_1$ von 8 mm verbunden sind, und einem zur Montage an dieser Felge vorgesehenen Luftreifen, der versehen ist mit einer radialen Karkassenbewehrung (1), einer aus wenigstens zwei gekreuzten Einlagen bestehenden Scheitelbewehrung und zwei Wülsten (B), die jeweils durch wenigstens einen Wulstkern (3), um den die Karkassenbewehrung (1) verankert ist, und einem Hilfskern (4), um den eine Einlage (5) aus Fäden oder Seilen gewikkelt ist, verstärkt sind,
   dadurch **gekennzeichnet,** daß
   - einerseits die Basis (2) des Wulstes, gesehen in axialem Schnitt, ein Profil mit einer Erzeugenden (21, 22) mit zwei Neigungen gegen die Drehachse des Luftreifens aufweist, wobei der axial innere Bereich einen Winkel von zwischen 25° und 30° bildet und der axial äußere Bereich einen Winkel von zwischen 15° und 20° bildet, wobei die Erzeugende (21, 22) axial nach außen durch kreisbogenförmige Abschnitte (23, 24) verlängert ist, deren Radien im wesentlichen gleich den Radien $\rho_1$ und $\rho_2$ des Profils der Felge sind, und der am weitesten von der Drehachse entfernte Punkt der Basis (2) des Wulstes einen Abstand ($R_B$) von der Drehachse hat, der kleiner ist als der Radius $R_J$ der Felgenkante (13), und
   - andererseits der Hilfskern (4) mit einem Streckelastizitätsmodul von wenigstens 4000 MPa in dem Bereich des Wulstes B liegt, der vorgesehen ist, um die Felgenkante (13) abzudecken, so daß das Verhältnis

$$s = \frac{R_J - R_B}{R_I - R_B}$$

   wenigstens gleich 0,1 ist, wobei $R_I$ der Innenradius des Hilfskerns (4) ist und die um den Hilfskern (4) gewickelte Verstärkungseinlage (5) aus zwei Schichten (51, 52) von Fäden oder Seilen gebildet ist, von denen wenigstens eine sich bis zur Spitze (6) des Wulstes (B) erstreckt, und die Fäden oder Seile mit der Umfangsrichtung einen Winkel von zwischen 90° und 45° bilden.

2. Luftreifen nach Anspruch 1,
   dadurch gekennzeichnet, daß
   der Hilfskern (4) ein geflochtener Kern mit kreisförmigem Querschnitt ist, dessen Querschnittsradius zwischen 5 und 10 mm liegt.

3. Luftreifen nach einem der Ansprüche 1 bis 2,
   dadurch gekennzeichnet, daß
   die zwei Schichten (51, 52) der Lage (5) wenigstens unter dem Hauptkern (3) bis zur Spitze (6) des Wulstes B übereinanderliegen.

4. Luftreifen nach Anspruch 3,
   dadurch gekennzeichnet, daß
   die Enden der Schichten (51, 52) gegeneinander verschoben sind, wobei die radial innere Schicht (52) in der Spitze des Wulstes ansteigt.

5. Luftreifen nach einem der Ansprüche 1 bis 4,
   dadurch gekennzeichnet, daß
   die Fäden oder Seile der Verstärkungseinlage (5) aus Metall, vorzugsweise aus Stahl sind und einen Winkel von 90° zur Umfangsrichtung bilden.

6. Luftreifen nach einem der Ansprüche 1 bis 5,
   dadurch gekennzeichnet, daß
   das Ende der Rückführung (50) der Karkassenbewehrung (1) radial bei einem Radius R liegt, der kleiner ist als der Außenradius $R_E$ des Hilfskerns (4).

7. Luftreifen nach einem der Ansprüche 1 bis 6,
   dadurch gekennzeichnet, daß
   eine Vertiefung (7) radial oberhalb des Hilfskerns (4) in der Flanke des Luftreifens gebildet ist.

FIG.1

FIG.2